Europäisches Patentamt

European Patent Office

Office européen des brevets

(19)

(11) Numéro de publication : **0 299 814 B1**

(12) **FASCICULE DE BREVET EUROPEEN**

(45) Date de publication du fascicule du brevet :
**24.07.91 Bulletin 91/30**

(51) Int. Cl.⁵ : **B29C 53/12,** B29C 67/14,
B29C 53/82

(21) Numéro de dépôt : **88401470.5**

(22) Date de dépôt : **14.06.88**

(54) **Procédé et appareillage pour fabriquer en continu des corps à section profilée en matière stabilisable armée à l'aide d'un mandrin et d'un support.**

(30) Priorité : **15.06.87 FR 8708329**

(43) Date de publication de la demande :
**18.01.89 Bulletin 89/03**

(45) Mention de la délivrance du brevet :
**24.07.91 Bulletin 91/30**

(84) Etats contractants désignés :
**BE DE GB IT NL**

(56) Documents cités :
DE-A- 2 519 621
FR-A- 2 049 167
FR-A- 2 312 356
GB-A- 2 057 341
GB-A- 2 088 320

(73) Titulaire : **INSTITUT FRANCAIS DU PETROLE**
**4, Avenue de Bois-Préau**
**F-92502 Rueil-Malmaison (FR)**

(72) Inventeur : **Huvey, Michel**
**2, avenue des Pinsons**
**F-78380 Bougival (FR)**

EP 0 299 814 B1

Jouve, 18, rue Saint-Denis, 75001 PARIS

## Description

La présente invention concerne un perfectionnement aux appareillages de fabrication en continu de corps à section profilée en matière stabilisable armée. Ces appareillages, tel celui décrit dans les demandes de brevets GB-A-2.088.320 et FR-A-2.312.356, comprennent notamment en combinaison un mandrin entraîné en rotation autour d'un axe longitudinal et un support enroulé hélicoïdalement sur ce mandrin. Ces corps à section profilée peuvent notamment être des barres incurvées en matière stabilisable armée.

De telles barres sont utilisables pour l'élaboration d'arbres rigides ou flexibles, tels que des tubes, résistant aux efforts différentiels de pression, de traction, de compression, de torsion ou de flexion.

Par matière stabilisable, on entend les corps pouvant prendre une forme stable par un processus physique ou chimique, tel que fusion avec refroidissement, ou réticulation. Ces matériaux peuvent être, par exemple, des matériaux thermoplastiques, des matériaux thermodurcissables, des élastomères, ou des métaux.

Des techniques antérieures de fabrication de barres profilées au moyen d'un mandrin et d'un profilé creux sont, par exemple, décrites dans les brevets US-A-3.966.388 et FR-A-2.312.356, ou dans la demande de brevet française EN. 86/05.093 qui concerne un support moulant simultanément plusieurs barres.

Cependant, l'utilisation industrielle de ces techniques accuse un manque de souplesse du dispositif de fabrication, qui se traduit notamment par une irrégularité d'avancement du support-moule sur le mandrin et dont l'effet néfaste est accru lorsque la cadence de fabrication et/ou la longueur du mandrin croissent.

La longueur du mandrin dépend notamment du temps nécessaire à la stabilisation de la matière constitutive des barres. En général, cette longueur croît relativement autant que la vitesse de rotation du mandrin, elle-même fonction croissante de la cadence de fabrication.

L'emploi de fours de stabilisation de grande longueur autorise l'utilisation de matière à stabilisation lente, telle des résines peu réactives, et permet ainsi de bénéficier de nombreux avantages liés à cette matière, telle que la préréticulation.

Cette irrégularité d'avancement s'accompagne de blocages du support et/ou du profilé lors de l'enroulage du support sur le mandrin, ou lors de sa progression, ou encore lors de son évacuation.

Ces blocages peuvent entraîner des déformations des profilés et plus particulièrement des barres incurvées qui produisent des contraintes néfastes lors de leur utilisation notamment lors de leur mise en place définitive, pour la fabrication de tubes.

La présente invention propose donc un appareillage pour réaliser en continu des corps à section profilée en matière stabilisable armée, qui comprend en combinaison un mandrin, des moyens entraînant ce mandrin en rotation autour de son axe longitudinal, le mandrin maintenant au moins un support enroulé hélicoïdalement sur ce même mandrin, des moyens pour faire progresser longitudinalement le support sur le mandrin, tels une rampe, des moyens pour enrouler autour du mandrin et sur le support des éléments de renforcement imprégnés de matière stabilisable, des moyens de stabilisation disposés sur une partie au moins de la longueur du mandrin et des moyens pour séparer du mandrin la matière armée ayant subit la stabilisation, le support étant enroulé à une première extrémité du mandrin et séparé du mandrin à une deuxième extrémité.

Cet appareillage est notamment caractérisé en ce que la première extrémité du mandrin comporte une première zone surélevée, dite portée de calibrage, sur laquelle vient s'enrouler le support, la portée ayant une longueur suffisante pour entraîner le support par effet de cabestan et ayant une longueur limitée pour ne pas entraver la progression du support sur le mandrin.

Ainsi, grâce à cette portée de calibrage, les frottements longitudinaux du support sur la partie comportant une restriction de diamètre et appelée longueur courante du mandrin, sont considérablement réduits. De ce fait, la longueur du mandrin peut être assez grande sans risquer des blocages et des chevauchements du support sur le mandrin, notamment sur sa longueur courante. De même, l'entraînement circonférentiel du profilé par effet de cabestan est bien mieux régulé et l'entraînement longitudinal, produit par l'insertion du support entre la rampe du mandrin et la dernière spire de support introduite, est beaucoup plus stable.

La portée de calibrage pourra avoir un diamètre constant.

La deuxième extrémité du mandrin pourra comporter une deuxième zone surélevée, dite portée d'extraction, sur laquelle le support est enroulé et à partir de laquelle on déroule le support. Cette portée d'extraction a une longueur et un diamètre adaptés à permettre une bonne progression du support sur le mandrin lorsqu'une traction de dégagement est exercée sur le support à l'extrémité du mandrin.

La portée d'extraction permet de réguler la vitesse d'extraction en l'égalisant sensiblement avec la vitesse d'alimentation. Cette disposition permet d'éviter, soit l'accumulation des barres dans le four par production de boucles, soit des tractions sur ces barres, donc des malformations ou des contraintes résiduelles préjudiciables lors de l'utilisation des barres et aussi des blocages à l'entraînement du support sur le mandrin.

La portée d'extraction offre notamment beaucoup d'intérêt lorsque les barres une fois extraites, sont acheminées vers un poste automatique, tel un poste de bobinage automatique.

Le mandrin pourra comporter, au moins sur une partie de la surface des portées de calibrage et éventuellement d'extraction, un matériau antiadhésif adapté à empêcher l'adhérence, du fait des éventuelles projections de matière stabilisable, du support sur le mandrin.

La présente invention propose en outre l'utilisation d'un système de lubrification d'un mandrin pour la fabrication de corps profilé, en particulier un mandrin tel que le propose l'invention, qui accroît notablement la souplesse d'utilisation des appareillages employant de tels mandrins.

L'appareillage pourra comporter un système de lubrification adapté à favoriser un déplacement longitudinal du support sur le mandrin en direction de la deuxième extrémité. Ce système pourra comporter un fluide lubrifiant approprié, au moins au niveau du contact entre le support et le mandrin. Ce système pourra aussi comporter, au moins sur une partie de la surface des portées de calibrage et éventuellement d'extraction, un matériau favorisant le glissement du support sur le mandrin. Ce matériau pourra être du TEFLON qui est une marque déposé de Du Pont de Nemours.

De même, la présente invention propose, notamment pour les mandrins à portée(s) de calibrage ou éventuellement d'extraction tels que précédemment décrits qu'au moins une partie de la portée de calibrage et/ou d'extraction comporte un revêtement adapté à favoriser sélectivement le frottement circonférentiel, de préférence sans trop affecter le frottement longitudinal du support sur le mandrin. De cette manière, le support sera correctement entraîné en rotation et pourra se déplacer sur de grandes longueurs sans craindre les inconvénients décrits ci-avant.

Lorsque les corps à section profilée sont des barres incurvées à section profilée, le support pourra comporter au moins une gorge formant moule, de section correspondant sensiblement à celle de la barre à obtenir.

La présente invention propose aussi un procédé pour fabriquer en continu des barres incurvées à section profilée au moyen d'un appareillage comprenant en combinaison un mandrin, des moyens entraînant ce mandrin en rotation autour de son axe longitudinal, le mandrin maintenant au moins un profilé creux enroulé hélicoïdalement sur le mandrin, le profilé comportant au moins une gorge formant un moule de section correspondante à celle du profilé à obtenir, des moyens pour enrouler autour du mandrin et dans la gorge des éléments de renforcement imprégnés de matière stabilisable, des moyens de réticulation disposés sur une partie au moins de la longueur du mandrin et des moyens pour séparer du mandrin la matière profilée et armée ayant subit la stabilisation.

Ce procédé est notamment caractérisé en ce qu'il comporte les étapes suivantes :

— on enroule ledit profilé creux à une première extrémité du mandrin comportant une portée de calibrage en créant un effet de cabestan entre d'une part le mandrin et d'autre part le profilé creux, et/ou les éléments de renforcement,

— on déplace longitudinalement vers une deuxième extrémité le profilé creux garni des éléments de renforts au-dessus d'une partie du mandrin ayant un diamètre inférieur à celui de ladite portée de calibrage, et

— on sépare ledit profilé creux dudit mandrin à ladite deuxième extrémité.

La demande de brevet FR-A-2.049.167 décrit la fabrication de barres en fibre de verre fixe noyées dans une résine thermodurcissable (les barres ayant des formes d'hélice) au moyen d'un cylindre façonneur qui comporte une gorge profilée et d'un tambour d'entraînement tournant dans le sens du pas de l'hélice et entraînant les barres au cours de leur durcissement.

L'invention sera mieux comprise et ses avantages apparaîtront plus clairement à la lecture de la description suivante illustrée par les figures annexées parmi lesquelles :

— les figures 1 et 2 illustrent schématiquement l'appareillage de fabrication de barres cintrées, en cours de fonctionnement,

— la figure 3 montre partiellement en coupe le même appareillage que celui schématisé à la figure 1 et comportant les modifications selon l'invention.

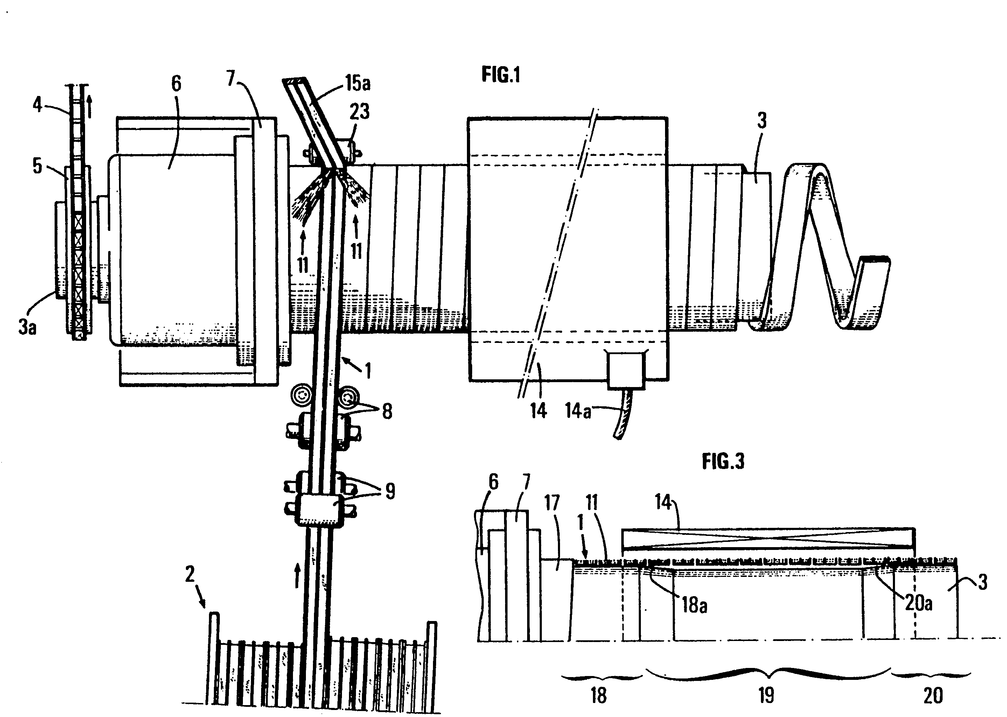

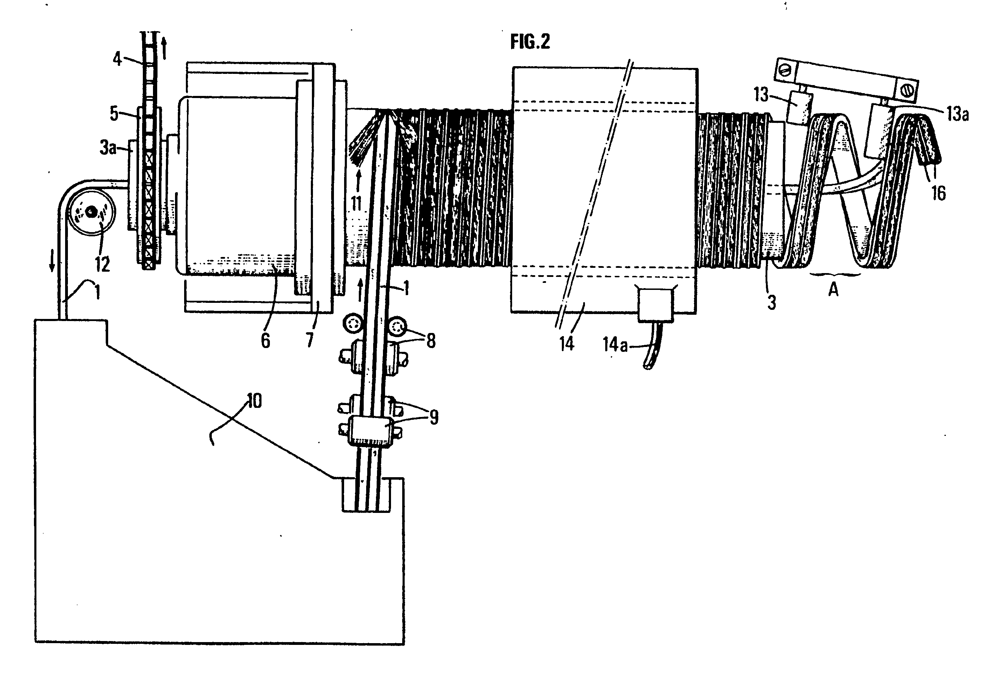

Sur les figures 1 et 2, la référence 1 désigne un support profilé évidé qui est bobiné sur un tambour ou mandrin 3. L'arbre 3a du tambour 3 est relié à des moyens d'entraînement en rotation de ce tambour, qui comporte par exemple une chaîne 4 engrenant sur un pignon denté 5 calé sur l'arbre 3a.

L'arbre 3a repose sur le palier 6 par l'intermédiaire de roulement, ce palier étant solidaire d'un chassis 7.

Avant d'être bobiné sur le mandrin 3, le support profilé passe entre les galets de guidage 8 et de tension 9.

Le support 1 représenté comporte plusieurs gorges longitudinales qui, au fur et à mesure de l'enroulement sur le tambour 3 sont remplies de filaments 11 à haute résistance, ou rovings, préalablement imprégnés d'une matière plastique stabilisable, capable ou non d'adhérer aux parois internes des gorges selon leur position dans le support et selon le but recherché, et capable d'adhérer auxdits filaments, ce mélange de filaments et de matière stabilisable formant les noyaux 16 du support profilé qui deviendront, après extraction, les barres cintrées armées.

Le support 1 appelé aussi moule-support ou encore moule profilé, ainsi garni, passe ensuite dans un four 14 où il est soumis à un traitement thermique capable de stabiliser la matière plastique armée qu'il renferme.

Le four 14 est alimenté en énergie par tout moyen approprié, tel que, par exemple, le câble 14a, si l'on utilise des moyens de chauffage électriques.

Sur la figure 1, la référence 2 désigne une bobine de stockage du moule profilé, qui, passant entre les galets de guidage 8 et de tension 9, va être rempli desdits filaments.

Avant l'entrée dans le four 14, le moule peut être éventuellement recouvert d'un élément 15, 15a formant couvercle.

Cet élément pourra être constitué d'un ruban 15 en matière plastique ou bien un élément profilé 15a dont la section est adaptée à permettre son emboîtement sur le moule 1 avant le traitement thermique dans le four 14 comme dans le brevet FR-2.494.401 ou encore la demande de brevet français EN. 86/05.096.

Un galet 23 presse l'élément 15a sur le moule profilé 1 pour assurer cet emboîtement. Une légère traction sur l'élément 15a peut également assurer cet emboîtement par effet cabestan.

On peut également, comme illustré par la figure 2, extraire du moule profilé 1 les barres incurvées profilées 16 qui sont formées par moulage. On réalise par exemple cette extraction en un point situé à la sortie du mandrin, en courbant le moule 1 grâce aux galets 13 et 13a, vers l'axe du mandrin et en le faisant passer dans le mandrin puis dans l'arbre 3a vers la gauche de la figure, le mandrin 3 et l'arbre 3a ayant été tous deux alésés.

Il est également possible de sortir directement le moule entre des groupes de barres formées par exemple, dans l'espace A représenté à la figure 2.

Les barres incurvées armées 16 extraites du moule 1 sont dirigées vers un lieu de stockage ou d'utilisation. Quant au moule 1 qui passe sur le galet 12 à sa sortie de l'arbre d'entraînement 3a, il peut être soit stocké, soit réutilisé en continu, après passage dans un dispositif 10 de nettoyage du moule 1 par un moyen convenable.

A titre d'exemple non limitatif, on a réalisé un support creux ayant trois gorges formant trois moules identiques de section rectangulaire 5 mm × 7 mm et une épaisseur des parois externes et des cloisons internes de 1 mm. Ce support pourra être fabriqué en polyamide 11 (généralement désigné par la marque de fabrique Rilsan) par un procédé d'extrusion classique.

On a garni cette gorge d'un mélange de 70 parties en poids de mèches continues de fibres de verre unidirectionnelles, non tordues et de 30 parties en poids d'un mélange de résine époxyde du type diglycidyléther de bisphénol A (100 parties) et de 4,4° diaminodiphényl méthane (27 parties en poids).

Une fois le garnissage exécuté, une contre-forme adaptée, comme décrite dans le brevet français FR- 2.312.356, peut être utilisée pour assurer la bonne répartition du garnissage dans le moule.

Après passage dans le four 14, le produit fini quitte le mandrin 3 et la spirale obtenue peut être utilisée en tant qu'élément de renfort pour réaliser une conduite légère résistante.

La figure 3 montre en détail un agencement du mandrin 3 qui permet un déplacement correct des différentes spires du support 1.

L'effet de cabestan nécessaire à l'entraînement du support en rotation avec le mandrin est produit par une traction suffisante du moule-support 1 et/ou des rovings 11.

Le frottement des bobines de rovings initialement stockées sur un cantre peut par exemple assurer de manière constante cette traction.

L'introduction du moule-support 1 à une première extrémité du mandrin contre la rampe 17, produit un déplacement en translation sur le mandrin de l'ensemble des spires du support vers la deuxième extrémité du mandrin.

Le moule-support 1 est calibré, dans une première zone 18 surélevée du mandrin 3 dite portée de calibrage, dont la longueur peut par exemple être comprise entre 10 et 40 largeurs de spires de moulesupport 1, soit de préférence 20 largeurs de spires lorsque le mandrin est téflonisé.

Sur cette portée de calibrage, les fils d'armure sont placés dans le support.

Dans une zone intermédiaire 19 correspondant à la longueur courante du mandrin, une restriction de diamètre est pratiquée pour que le moule- support 1 s'achemine vers la deuxième extrémité du mandrin avec le minimum de frottement entre le moule-support et le mandrin.

Pratiquement, cette restriction de diamètre, qui est comprise entre 0,5 et 2 mm pour un mandrin de 75 cm de diamètre (soit une restriction relative comprise sensiblement 7/1000 et 3/100), est assez supérieure à celle que l'on aurait pu calculer pour tenir compte des variations dimensionnelles du corps profilé 1, notamment du fait du retrait résultant de la stabilisation en particulier dans le four 14.

Cette restriction de diamètres entre celui de la portée de calibrage et celui de la zone intermédiaire ne doit pas être trop importante, pour ne pas produire de chevauchement des spires, ou créer des blocages dans le four et ainsi détruire tout l'effet recherché.

Etant donné que l'on pratique sur la portée de calibrage 18, un remplissage progressif du support sur plusieurs spires (une dizaine) avec les rovings 11, on peut considérer en première approximation que la longueur de la zone intermédiaire est voisine de la longueur du four, elle-même fonction du temps de stabilisation suffisant et optimum pour une certaine température et une matière donnée.

Ainsi, par exemple, lorsque la vitesse de rotation du mandrin est de 1 tour par minute et que l'on désire un temps de stabilisation d'une heure, le nombre de spires dans le four est de 60. Pour une vitesse de rotation de 2 tours par minute et le même temps de stabilisation, le nombre de spires dans le four est de 120. De même, pour une vitesse de rotation de 3 tours par minute et les mêmes conditions de stabilisation, le nombre de spires dans le four est de 180.

Dans une deuxième zone 20 surélevée du mandrin 3, dite portée d'extraction, d'une longueur adaptée aux efforts nécessaires à l'extraction du moule du mandrin par un effet de cabestan, le moule-support se place sur le mandrin, poussé par la progression des spires.

Le passage des spires entre la zone intermédiaire 19 et la portée d'extraction 20 s'effectue grâce à une conicité 20a de faible valeur.

De la même manière, le passage des spires de la portée de calibrage 18 à la zone intermédiaire pourra s'effectuer grâce à une conicité 18a.

Le diamètre de la portée d'extraction est adapté, notamment en fonction des variations dimensionnelles du support dues à la stabilisation, pour ne pas produire de désorganisation dans les spires et pour que le débit masse de support et/ou de barres soit sensiblement constant entre la portée de calibrage et la portée d'extraction.

Pour favoriser le glissement dans la portée de calibrage 18 et/ou d'extraction, il est nécessaire que le mandrin soit glissant et le reste tout au long de l'opération qui peut durer des mois, vingt-quatre heures sur vingt-quatre, pour des fabrications importantes. Pour cela, il faut que les gouttelettes de résine débordant du moule-gorge 1 et arrivant au contact du mandrin 3 chaud n'y adhèrent pas. Un revêtement de TEFLON dur d'une épaisseur comprise entre 30 et 150 micromètres, permet d'atteindre ce but. Pour améliorer encore le glissement, on lubrifie en permanence la surface de frottement entre le moule-gorge et le mandrin, en déposant en continu un film d'huile sur le fond du moule-gorge sur un poste approprié un peu en amont du point de pose de ce moule-gorge sur le mandrin. Lorsque le moule-support-gorge doit faire partie intégrante du profilé, la pose de ce film d'huile est effectuée de telle sorte que ce film ne puisse en aucun cas pénétrer à l'intérieur du moule-gorge, ce qui empêcherait toute adhésion du composite sur le moule-gorge. L'huile utilisée sera de préférence non agressive pour le Rilsan et ne se décomposera pas brutalement à la température des parois du four.

Il est par contre évident qu'en cas de fabrication de profilés pour lesquels le moule-gorge n'est pas un élément constitutif, le film d'huile pourra être déposé à l'intérieur comme à l'extérieur et pourra ainsi constituer l'agent de démoulage permettant le recyclage aisé de ce moule-support.

## Revendications

1. Appareillage pour fabriquer en continu des corps à section profilée en matière stabilisable armée, ledit appareillage comprenant en combinaison un mandrin (3), des moyens (3a, 4, 5) entraînant ce mandrin en rotation autour de son axe longitudinal, ledit mandrin maintenant au moins un support (1) de section profilée enroulé hélicoïdalement sur ledit mandrin (3), des moyens (17) pour faire progresser longitudinalement ledit support sur ledit mandrin, tels une rampe, des moyens (8, 9) pour enrouler, autour du mandrin et sur ledit support, des éléments de renforcement (11) imprégnés de matière stabilisable, des moyens de stabilisation (14) disposés sur une partie au moins de la longueur du mandrin et des moyens (13, 13a) pour séparer du mandrin la matière armée ayant subi la stabilisation, ledit support (1) étant enroulé à une première extrémité du mandrin et séparé du mandrin à une deuxième extrémité, l'appareillage étant caractérisé en ce que la première extrémité du mandrin comporte une première zone surélevée (18), dite portée de calibrage, sur laquelle vient s'enrouler ledit support (1), ladite portée ayant une longueur suffisante pour entraîner le support par effet de cabestan et ayant une longueur limitée pour ne pas entraver la progression du support sur le mandrin (3).

2. Appareillage selon la revendication 1, caractérisé en ce que la portée de calibrage a un diamètre sensiblement constant.

3. Appareillage selon l'une des revendications 1 ou 2, caractérisé en ce que ladite deuxième extrémité du mandrin comporte une deuxième zone surélevée (20), dite portée d'extraction, sur laquelle ledit support est enroulé et à partir de laquelle on déroule ledit support (4), et en ce que ladite portée d'extraction (20) a une longueur et un diamètre adaptés à permettre une bonne progression dudit support sur ledit mandrin lorsqu'une traction de dégagement est exercée sur ledit support à l'extrémité dudit mandrin.

4. Appareillage selon l'une des revendications 1 à 3, caractérisé en ce que ledit mandrin (3) comporte, au moins sur une partie de la surface des portées de calibrage (18) et éventuellement d'extraction (20), un matériau antiadhésif adapté à empêcher l'adhérence, du fait des éventuelles projection de matière stabilisable, dudit support sur ledit mandrin (3).

5. Appareillage selon l'une des revendications 1 à 4, caractérisé en ce qu'il comporte un système de lubrification adapté à favoriser un déplacement longitudinal du support sur le mandrin en direction de ladite deuxième extrémité.

6. Appareillage selon la revendication 5, caractérisé en ce que le système de lubrification comporte un dispositif utilisant un fluide lubrifiant adapté, au moins au niveau du contact entre ledit support et ledit mandrin.

7. Appareillage selon l'une des revendications 5 ou 6, caractérisé en ce que le système de lubrification comporte, au moins sur une partie de la surface des portées de calibrage (18) et éventuellement d'extraction, un matériau favorisant le glissement dudit support sur ledit mandrin (3).

8. Appareillage selon l'une des revendications 1 à 7, caractérisé en ce qu'au moins une partie de la portée de calibrage (18) et/ou de la portée d'extraction (20) comportent un revêtement adapté à favoriser sélectivement le frottement circonférentiel de préférence sans trop affecter le frottement longitudinal du support sur ledit mandrin.

9. Appareillage selon l'une des revendications 1 à 8, où les corps à section profilée sont des barres incurvées (16) à section profilée, caractérisé en ce que ledit support comporte au moins une gorge (1) formant moule, de section sensiblement correspondante à celle de la barre à obtenir.

10. Procédé pour fabriquer en continu des barres incurvées à section profilée au moyen d'un appareillage comprenant en combinaison un mandrin (3), des moyens (3a, 4, 5) entraînant ce mandrin en rotation autour de son axe longitudinal, ledit mandrin maintenant au moins un profilé creux (1) enroulé hélicoïdalement sur ledit mandrin (3), ledit profilé comportant au moins une gorge formant un moule de section correspondante à celle du profilé à obtenir, des moyens (8, 9) pour enrouler autour du mandrin et dans ladite gorge des éléments de renforcement imprégnés de matière stabilisable, des moyens de réticulation (14) disposés sur une partie au moins de la longueur du mandrin et des moyens pour séparer (13, 13a) du mandrin la matière profilée et armée ayant subi la stabilisation, caractérisé en ce qu'il comporte les étapes suivantes :

— on enroule ledit profilé creux à une première extrémité du mandrin comportant une portée de calibrage (18) et créant un effet de cabestan entre le mandrin (3) et le profilé creux (1) et/ou les éléments de renforcement (11),

—— on déplace longitudinalement vers une deuxième extrémité le profilé creux garni des éléments de renforts (18) au-dessus d'une partie du mandrin ayant un diamètre inférieur (19) à celui de ladite portée de calibrage, et

— on sépare lesdites barres dudit mandrin à ladite deuxième extrémité.

**Patentansprüche**

1. Vorrichtung zum kontinuierlichen Herstellen von Körpern mit Profilquerschnitt aus stabilisierbarem vestärktem Material, wobei die Vorrichtung in Kombination umfaßt : einen Dorn (3), Mittel (3a, 4, 5), die diesen Dorn in Drehung um seine Längsachse antreiben, wobei der Dorn wenigstens einen Träger (1) mit Profilquerschnitt hält, der spiralförmig auf diesen Dorn (3) gewickelt ist, Mittel (17), um in Längsrichtung diesen Träger auf diesem Dorn vorwandern zu lassen wie beispielsweise eine Rampe, Mittel (8, 9), um um den Dorn und auf diesem Träger Verstärkungselemente (11) aufzuwickeln, die mit stabilisierbarem Material imprägniert sind, Mittel zur Stabilisierung (14), die auf wenigstens einem Teil der Länge des Dorns angeordnet sind und Mittel (13, 13a), um vom Dorn das verstärkte Material, das die Stabilisierung erfahren hat, zu trennen, wobei dieser Träger (1) auf ein erstes Ende des Dorns gewickelt und vom Dorn an einem zweiten Ende getrennt ist, wobei die Vorrichtung dadurch gekennzeichnet ist, daß das erste Ende des Dorns eine erste erhöhte Zone (18), den sogenannten Kalibrierbereich umfaßt, auf welchem dieser Träger (1) gewickelt ist, wobei dieser Bereich eine ausreichende Länge hat, um den Träger durch den Kapstan-Effekt mitzunehmen und über eine begrenzte Länge verfügt, um das Vorwandern des Trägers (3) nicht zu beeinträchtigen.

2. Vorrichtung nach Anspruch 1, dadurch gekennzeichnet, daß der Kalibrierungsbereich einen im wesentlichen konstanten Durchmesser hat.

3. Vorrichtung nach einem der Ansprüche 1 oder 2, dadurch gekennzeichnet, daß dieses zweite Ende des Dorns eine zweite erhöhte Zone (20), den sogenannten Abziehbereich, umfaßt, auf welchem dieser Träger aufgewickelt ist und von welchem man diesen Träger (4) abwickelt und daß dieser Abziehbereich (20) eine Länge und einen Durchmesser derartiger Ausbildung hat, daß ein günstiges Vorwandern dieses Trägers auf diesem Dorn möglich ist, wenn ein Freigabezug auf diesen Träger am Ende dieses Dorns ausgeübt wird.

4. Vorrichtung nach einem der Ansprüche 1 bis 3, dadurch gekennzeichnet, daß dieser Dorn (3) wenigstens auf einem Teil der Oberfläche der Kalibrierungsbereiche (18) und gegebenenfalls Abziehbereiche (20) ein Antiadhesivmaterial umfaßt, das so ausgebildet ist, daß es die Haftung, aufgrund evtentuellen Aufspritzens stabilisierenden Materials dieses Trägers auf diesem Dorn (3) verhindert.

5. Vorrichtung nach einem der Ansprüche 1 bis 4, dadurch gekennzeichnet, daß sie ein Schmiersystem umfaßt, das so ausgebildet ist, daß eine Längsbewegung des Trägers auf dem Dorn in Richtung dieses zweiten Endes begünstigt wird.

6. Vorrichtung nach Anspruch 5, dadurch gekennzeichnet, daß das Schmiersystem ein Gerät umfaßt, welches ein angepaßtes fluides Schmiermittel wenigstens in Höhe des Kontaktes zwischen diesem Träger und diesem Dorn verwendet.

7. Vorrichtung nach einem der Ansprüche 5 oder 6, dadurch gekennzeichnet, daß das Schmiermittelsystem wenigstens auf einem Teil der Oberfläche der Kalibrierung (18) — und gegebenenfalls Abziehbereiche — ein Material verwendet, welches das Gleiten dieses Trägers auf diesem Dorn (3) begünstigt.

8. Vorrichtung nach einem der Ansprüche 1 bis 7, dadurch gekennzeichnet, daß wenigstens ein Teil des Kalibrierbereichs (18) und/oder des Abziehbereichs (20) einen Überzug derartiger Ausbildung umfaßt, daß selektiv die Umfangsreibung begünstigt wird, vorzugsweise ohne die Längsreibung des Trägers auf dem Dorn zu beeinflußen.

9. Vorrichtung nach einem der Ansprüche 1 bis 8, wo die Körper mit Profilquerschnitt gekrümmte Stäbe (16) profilierten Querschnittes sind, dadurch gekennzeichnet, daß dieser Träger wenigstens eine eine Form bildende Nut (1) von einem Querschnitt im wesentlichen entsprechend dem des zu erhaltenden Stabes umfaßt.

10. Verfahren zur kontinuierlichen Herstellung gekrümmter Stäbe mit Profilquerschnitt vermittels einer Vorrichtung, die in Kombination einen Dorn (3), Mittel (3a, 4, 5), die diesen Dorn in Drehung um seine Längsachse versetzen aufweist, wobei der Dorn wenigstens ein Hohlprofil (1) hält, das spiralförmig auf diesen Dorn (3) gewickelt ist, wobei das Profil wenigstens eine Nut umfaßt, die eine Form von einem Querschnitt entsprechend dem des zu erhaltenden Profils bildet, weiterhin Mittel (8, 9), um um diesen Dorn und in dieser Nut mit stabilisierbarem Material imprägnierte Verstärkungselemente zu wickeln und Vernetzungsmittel (14), die auf wenigstens einem Teil der Länge des Dorns angeordnet sind und Mittel (13, 13a), um vom Dorn das profilierte und verstärkte Material, das die Stabilisierung erfahren hat, zu trennen, dadurch gekennzeichnet, daß es die folgenden Schritte umfaßt :

     — man wickelt dieses Hohlprofil an einem ersten Ende des Dorns mit einem Kalibrierbereich (18) auf und erzeugt einen Kapstan-Effekt zwischen dem Dorn (3) und dem Hohlprofil (1) und/oder den Verstärkungselementen (11),

     — man verschiebt in Längsrichtung gegen ein zweites Ende das Hohlprofil, das mit Verstärkungselementen (18) oberhalb eines Teils des Dorns ausgekleidet ist, welcher einen kleineren Durchmesser (19) als den des Kalibrierbereichs hat, und

     — man trennt diese Stäbe vom Dorn an diesem zweiten Ende.


## Claims

1. Equipment for the continuous production of bodies with a profiled section and made from a reinforced material capable of stabilisation, the said equipment comprising, in combination, a mandrel (3), a means (3a, 4, 5) of driving this mandrel in rotation about its longitudinal axis, the said mandrel retaining at least one support (1) of profiled section wound helically onto the said mandrel (3), a means (17) of progressing the said support longitudinally over the said mandrel, such as an inclined plane, a means (8, 9) for winding, about the mandrel and onto the said support, the reinforcing elements (11) impregnated with a material capable of stabilisation, a means of stabilisation (14) positioned on at least one part of the length of the mandrel and a means (13, 13a) to separate, from the mandrel, the reinforced material after it has been subjected to the stabilisation process, the said support (1) being wound at a first end of the mandrel and removed from the mandrel at a second end, the equipment being characterised in that the first end of the mandrel includes a first raised zone (18), known as the "sizing bearing surface", on which the said support (1) is wound, the said bearing surface having a length sufficient to drive the support by means of the "capstan or winch effect" and having a limited length in order that it does not impede the progress of the support on the mandrel (3).

2. Equipment in accordance with claim 1, characterised in that the sizing bearing surface has a basically constant diameter.

3. Equipment in accordance with one of claims 1 or 2, characterised in that the said second end of the mandrel may include a second raised zone (20), this being known as the "removal bearing surface", on which the said support is wound and used to unwind the said support (4) and in that the said removal bearing surface (20) has a length and a diameter which is designed to permit the said support to progress correctly along the said mandrel when a releasing tensile force is exerted on the said support at the end of the said mandrel.

4. Equipment in accordance with one of claims 1 to 3, characterised in that the said mandrel (3) includes, on at least part of the surface forming the sizing bearing surface (18) and, if necessary, the removal bearing surface (20), a non-stick material which is designed to prevent adherence of the said support on the said mandrel (3), due to any projections of the material capable of stabilisation.

5. Equipment in accordance with one of claims 1 to 4, characterised in that the equipment intrudes a lubrication system designed to improve the longitudinal displacement of the support over the mandrel in the direction of the said second end.

6. Equipment in accordance with claim 5, characterised in that the lubrication system includes a device using a suitable lubricating fluid, at least in the area of contact between the said support and the said mandrel.

7. Equipment in accordance with one of claims 5 or 6, characterised in that the lubrication system includes, on at least part of the surface of the sizing bearing surface (18) and, if necessary, the removal bearing surface, a material which improves sliding of the said support on the said mandrel (3).

8. Equipment in accordance with one of claims 1 to 7, characterised in that at least one part of the sizing bearing surface (18) and/or the removal bearing surface (20) includes a coating intended to selectively improve the circumferential friction conditions, preferably without adversely affecting the longitudinal friction of the support on the said mandrel.

9. Equipment in accordance with one of claims 1 to 8, where the bodies with a profiled section are in the form of curved bars (16) with a profile section, characterised in that the said support may comprise at least one channel (1) forming a mould, its section basically corresponding to that of the bar to be produced.

10. Method for the continuous production of curved bars with a profile section, by means of equipment which comprises, in combination, a mandrel (3), a means (3a, 4, 5) of driving this mandrel in rotation about its longitudinal axis, the said mandrel retaining at least one hollow profile section (1) wound helically onto the said mandrel (3), the profile section comprising at least one channel forming a mould with a section corresponding to that of the profile section to be produced, a means (8, 9) for winding, about the mandrel and in the said channel, reinforcing elements impregnated with a material capable of stabilisation, a means of cross linking (14) being located on at least part of the length of the mandrel and including a means for separating (13, 13a) the reinforced profiled material from the mandrel following the stabilisation stage, characterised in that it comprises the following stages :

— the said hollow profile section is wound onto a first end of the mandrel, this including a sizing bearing surface (18), in order to establish a "capstan effect" between the mandrel (3) and the hollow profile (1) and/or the reinforcing elements (11)

— the hollow profile section, provided with the reinforcing elements (18) is displaced longitudinally over part of the mandrel with a diameter less (19) than that of the sizing bearing surface, towards the second end of the said mandrel, and

— the said bars are removed from the said mandrel at the said second end.

**FIG.1**

4

5

3a

6

7

15a

23

11

11

1

8

9

2

3

14

14a

**FIG.3**

6

7

17

1

11

14

18a

20a

3

18

19

20

FIG.2